# EUROPEAN PATENT APPLICATION

(11) **EP 0 903 521 A1**
(43) Date of publication of application: **24.03.1999**
(21) Application number: 98201991.1
(22) Date of filing: 15.06.1998
(51) Int. Cl.: F16K 17/38

(54) **Housing for a thermal gas valve fitting**

(30) Priority: 17.09.1997 NL 1007056
(71) Applicant: VSH Fabrieken B.V., 1212 AA Hilversum (NL)
(72) Inventor:
(74) Representative: Lips, Hendrik Jan George, Ir.

(57) **Abstract**

The valve fitting (1) has a housing (3) in which a valve element (3) is mounted. The valve element is biased towards a sealing seat by a spring, in which it is kept in its biased position by a fuse of fusable material. The housing has on its outer surface a spring element (4) extending all round which is obtained by outwardly deforming the material of the housing (3) to a kind of cup spring and which in the built-in state forms a sealing between the valve fitting (1) and a pipeline into which the valve fitting (1) is inserted.

## Description

The invention relates to a housing for a thermal gas valve fitting and in particular for a fitting in which the housing has a valve element which is biased towards a sealing seat by a spring and is kept in the biased state by a fuse from fusable material.

The materials and sealings employed with gas appliances are temperature-sensitive and will be destroyed in case of fire. Thereby, an uncontrolled outflow of gas will occur, which can result in a considerable explosion hazard, or, when the gas burns in the seat of fire, it will seriously increase the fire. Due to this, the damage, the burden for the environment and the required amount of fire extinguishing water will increase.

These risks can be avoided by thermal gas valve fittings. Said fittings are built-in upstream of said gas appliances in the gas pipes, or be incorporated in the gas appliances or their fittings. They will close automatically as soon as a predetermined temperature is reached. Then, they must prevent the outflow of gas during a certain time to a given limit temperature, in which some degree of leakage is permitted.

When the thermal gas valve fittings have been incorporated in the gas appliances or in their fittings, build in does not present specific problems. When on the other hand the valve fittings are built-in upstream in the gas pipe, which is inevitable when mounting afterwards, additional mounting operations will be necessary. In general, the housing is screwed to the accompanying connections using suitable sealing elements.

The object of the invention is to simplify build in of thermal gas valve fittings in gas pipes.

In order to achieve this object, the housing for the thermal gas valve according to the invention mentioned above is characterized in that the housing has a substantially cylindrical outer surface and can be sealingly inserted in a pipeline.

Thus, the only mounting activity consists of inserting the housing with the components contained in it into the pipeline. Then, it can be connected to a further pipeline or to a gas appliance in a known way.

In order to guarantee the sealing of the valve fitting in relation to the inner wall of the pipeline, it is suggested that the housing is provided with a spring element extending all round.

The latter will preferably be put in a groove formed in the outer surface of the housing. It has been found, that such a spring ring-like spring element can easily guarantee that the admissible degree of leakage is not exceeded.

The same holds for the alternatively suggested possibility to obtain the spring element by outwardly deforming the material of the housing to a kind of cup spring.

In any case, the spring element is capable of compensating for the inevitable tolerances in the inner diameter of the pipeline. The spring elements also constitute fireproof sealing elements.

According to a further elaboration of the invention, it is suggested that the housing has an outer surface conically narrowing in the direction of insertion and forming a calibration mandrel. The valve fitting is driven into the pipeline, so that an optimal sealing action is achieved and at the same time the fitting is kept in place in a reliable way.

Inserting the valve fitting in the pipeline offers the possibility to execute the house extremely thin-walled. Together with a suitable design of the components mounted in the housing, the pressure loss caused by the valve fitting can be kept to a minimum.

Further, manufacture of the housing is simplified in comparison to such structures having spanner planes, screw connections and the like.

The invention is further explained in the following by way of preferred embodiments in connection with the accompanying drawing. In the drawing:
Fig. 1 shows a diagrammatic illustration of a first embodiment in the mounted position;
Fig. 2 shows a diagrammatic illustration of a second embodiment in the mounted position;
Fig. 3 the embodiment of Fig. 2 in the unmounted position;
Fig. 4 shows the embodiment of a third embodiment in the mounted position.

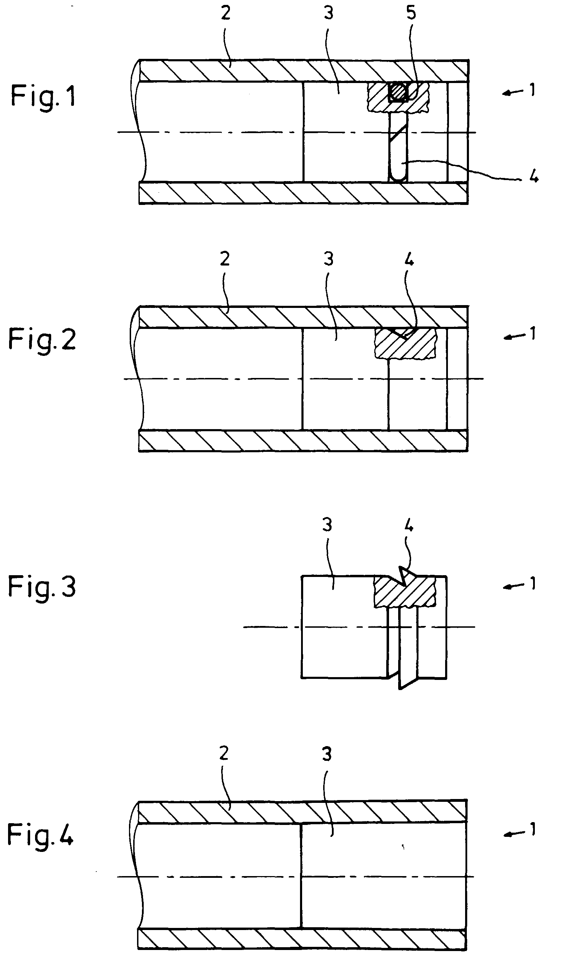

According to Fig. 1, a thermal valve fitting 1 is sealingly inserted into a pipeline 2. The valve fitting has a housing 3 comprising a valve element, biased towards the sealing seat by a spring and being kept in the biased position by a fuse from fusable material.

The housing 3 has a substantially cylindrical outer surface and carries a spring element 4 extending all round in the shape of a spring ring which has been put in a groove 5. The spring element 4 provides for a sufficient sealing of the housing 3 in relation to the pipeline 2 and compensates for the inevitable dimension tolerances. At the same time, it provides for keeping the valve fitting in place.

According to the Figures 2 and 3, the spring element 4 is obtained by outwardly deforming the material of the housing to a kind of cup spring. This appears in particular from Fig. 3, showing the valve fitting in the unmounted position.

In the embodiment according to figure 4, a spring element can be omitted. In the direction of insertion, the housing 3 is conically narrowed and on insertion into the pipeline 2 it acts as calibration mandrel, suitably widening the inner wall of said pipeline 2. Here, sealing and keeping in place are optimal.

Variations within the scope of the invention are possible. In the cases of the Figures 1 to 3, a number of spring elements extending all round and being distributed across the length of the valve fitting can be employed. According to Fig. 4, the housing 3 of the valve fitting is conically designed across its full length. Possibly, it will be sufficient to execute the part of the housing being at the back seen in the direction of insertion in a conical shape.

## Claims

1. Housing for a thermal gas valve fitting, characterized in that the housing (3) has a substantially cylindrical outer surface and can be sealingly inserted in a pipeline (2).

2. Housing according to claim 1, characterized in that in its outer surface it is provided with a spring element (4) extending all round.

3. Housing according to claim 2, characterized in that the spring element (4) has been put in a groove (5) formed in the outer surface of the housing (3).

4. Housing according to claim 2, characterized in that the spring element (4) is obtained by outwardly deforming the material of the housing (3) to a kind of cup spring.

5. Housing according to claim 1, characterized in that it has been provided with an outer surface conically narrowing in the direction of insertion and forming a calibration mandrel.
